(19) Europäisches Patentamt
European Patent Office
Office européen des brevets

(11) **EP 4 654 087 A1**

(12) **EUROPEAN PATENT APPLICATION**

(43) Date of publication:
**26.11.2025 Bulletin 2025/48**

(21) Application number: **24178061.8**

(22) Date of filing: **24.05.2024**

(51) International Patent Classification (IPC):
*G06N 3/096* *(2023.01)*

(52) Cooperative Patent Classification (CPC):
**G06N 3/096; G06N 3/045; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **TOYOTA JIDOSHA KABUSHIKI KAISHA Aichi-ken 471-8571 (JP)**
- **Concordia University Montréal, Québec H3G 1M8 (CA)**

(72) Inventors:
- **ALJUNDI, Rahaf 1140 Brussels (BE)**
- **SINGH, Vaibhav Montreal - Quebec, H3G 1M8 (CA)**
- **BELILOVSKY, Eugene Montreal - Quebec, H3G 1M8 (CA)**

(74) Representative: **Cabinet Beau de Loménie 103, rue de Grenelle 75340 Paris Cedex 07 (FR)**

(54) **COMPUTER-IMPLEMENTED METHOD FOR UPDATING A TEACHER-STUDENT FRAMEWORK**

(57) A computer-implemented method (20) for updating a teacher-student framework comprising a teacher model (T) and a student model (S), the computer-implemented method (20) comprising selecting (21), for a given test sample, the most confident model (S, T) among the student model (S) and the teacher model (T) based on a maximum logit score to generate a pseudo label for said test sample; updating (22) initial parameters ($\theta$) of the student model (S) based on the generated pseudo-label and updating initial parameters ($\theta'$) of the teacher model (T) based on the updated parameters ($\theta_n$) of the student model (S).

**[Fig. 2]**

**Description**

BACKGROUND OF THE INVENTION

1. Field of the invention

The present disclosure relates to the field of machine learning, specifically focusing on the teacher-student framework. In particular, the invention relates to a method and to an apparatus for updating such framework.

2. Description of Related Art

Vision-language models have exhibited remarkable performance across a variety of downstream tasks, establishing themselves as essential components in applications such as autonomous driving, medical imaging, and satellite imagery analysis. These models utilize deep learning architectures to process and interpret complex visual and textual data, facilitating critical functionalities such as object detection, image segmentation, and natural language understanding.

Despite their demonstrated efficacy, these models encounter significant challenges when adapting to new tasks or domains due to a phenomenon known as catastrophic forgetting which occurs when the acquisition of new information interferes with and degrades the performance on previously learned tasks, leading to a decline in overall model accuracy and reliability.

More specifically, catastrophic forgetting is a critical issue in the field of continual learning (CL), as models are required to adapt to evolving data distributions over time while retaining previously acquired knowledge, especially in autonomous driving. In this case, forgetting previously learned information could compromise the safety and efficiency of an autonomous vehicle. For instance, if a model forgets how to handle specific traffic scenarios or road conditions, it may fail to make appropriate decisions, potentially resulting in traffic violations.

Traditional CL methods typically involve supervised training sessions and employ various strategies to mitigate forgetting. One common strategy is the use of regularization techniques, such as Elastic Weight Consolidation (EWC) and Synaptic Intelligence. These techniques add regularization terms to loss functions, which penalize significant changes to important parameters, thereby preserving previously learned knowledge. Another approach involves external memory systems. These methods store a subset of previous data samples or intermediate representations, which can be replayed during training. This replay helps reinforce past knowledge and prevents it from being overwritten by new information.

Additionally, some CL methods dynamically expand the model's architecture to accommodate new tasks. Example include Progressive Neural Networks (PNNs) and dynamically expandable networks. These methods add new units or modules to the network as new tasks are encountered, allowing the model to learn new information without interfering with existing knowledge.

However, these traditional methods often fall short when applied to large pre-trained models. Despite their advanced capabilities, these models may exhibit suboptimal performance in continual learning scenarios due to the inherent limitations of the traditional techniques. For example, large pre-trained models may underperform even compared to their initial zero-shot capabilities, where they are deployed without any fine-tuning on a target task. This suboptimal performance highlights the challenges of effectively integrating continual learning strategies with the complex architecture and extensive knowledge base of large pre-trained models.

Thus, there is a need to develop a new approach to refresh and reinforce a model's memory of previously learned tasks, thereby reducing catastrophic forgetting without requiring extensive additional labeling efforts. This new approach aims to effectively integrate with the architecture and training paradigms of large pre-trained models, ensuring that they retain their accumulated knowledge while adapting to new tasks.

SUMMARY

The object of the invention is to at least substantially remedy the above-mentioned drawbacks. In this respect, the present invention relates to a computer-implemented method for updating a teacher-student framework comprising a teacher model and a student model, the computer-implemented method comprising selecting, for a given test sample, the most confident model among the student model and the teacher model based on a maximum logit score to generate a pseudo label for said test sample; updating initial parameters of the student model based on the generated pseudo-label and updating initial parameters of the teacher model based on the updated parameters of the student model.

For conciseness, the method is referred to hereinafter as the updating method. Further, as used herein, for conciseness and unless the context indicates otherwise, "a", "an", and "the" are intended to refer to "at least one" or "each" and to include plural forms as well. Conversely, generic plural forms include the singular.

As indicated above, the aim of the invention is to enable the model to adapt to new information while maintaining its performance on prior tasks. To achieve this, the invention updates a teacher-student framework, where a more complex teacher model guides a simpler student model.

The updating method first determines which model's prediction will generate a pseudo label for the specific test sample, based on each model's confidence level, noting that a test sample refers to a specific data instance used to evaluate the performance of each model. This sample is fed into each model to obtain a prediction.

The model with the highest confidence, measured by the maximum logit score, is then chosen to generate the pseudo label. This label serves as an approximation of the true label. The student model's parameters are then adjusted to align its predictions with the pseudo label. Finally, the teacher model's parameters are updated based on the adjusted parameters of the student model, incorporating the latest information and improving its performance.

It should be noted that the parameters of the student model or the teacher model can be among all learnable parameters that are well-known to a person skilled in the art.

Optionally, updating the initial parameters of the student model comprises minimizing a loss function with respect to the generated pseudo label.

In other words, the updating step aims to adjust the parameters of the student model in such a way that the difference between its predictions and the pseudo label is minimized, thus improving its performance. To achieve this, a loss function is defined to quantify the discrepancy between the predicted output of the student model and the desired pseudo label.

Optionally, the loss function is a cross-entropy loss that is minimized with respect to the parameters of the student model.

The cross-entropy loss function is commonly used in classification tasks within machine learning. Technically, cross-entropy loss measures the dissimilarity between the predicted probability assigned by the model and the pseudo-label.

Optionally, updating the initial parameters of the teacher model comprises processing an exponential moving average of the updated parameters of the student model.

An exponential moving average gives more weight to recent observations while gradually diminishing the influence of older ones. This means that as the student model's parameters are updated, the exponential moving average of these parameters evolves accordingly, capturing the most recent trends in parameter adjustments. In other words, by processing an exponential moving average of the student model's parameters, the teacher model effectively incorporates the latest information (and improvements) from the student model.

Optionally, the student model is a transformer model or a convolutional neural network, and the teacher model is a transformer model or a convolutional neural network.

In other words, both the student and teacher models can be either transformer models or convolutional neural networks (CNNs).

A transformer model is a type of neural network architecture commonly used in natural language processing (NLP) tasks. It relies on self-attention mechanisms to capture long-range dependencies in input sequences, making it well-suited for tasks such as language translation and text generation. However, it is important to note that a transformer can also refer to a specific variant called "Vision Transformer", which is tailored for computer vision tasks.

On the other hand, a convolutional neural network (CNN) is a type of neural network architecture frequently used in computer vision tasks. It employs convolutional layers to extract spatial features from input images, enabling it to perform tasks like image classification and object detection.

Depending on the nature of the data and the complexity of the task, the person skilled in the art can choose the most appropriate model architecture for their specific needs.

Optionally, selecting the most confident model comprises a step of computing a distribution of each model features for the given test sample over a predetermined number of dimensions, and generating an augmented version of the test sample before generating the pseudo label.

An augmented version of the test sample is generated before proceeding to generate the pseudo label. Augmentation techniques can include transformations such as rotation, scaling, or adding noise to the input sample. These augmentations help to expose the model to a broader range of scenarios, potentially improving its robustness and generalization capabilities.

Each model (both teacher and student) computes then a distribution of features for the given test sample. These features represent the model's internal representation of the sample and are computed over a predefined set of dimensions.

The present invention further relates to a computer program set including instructions for executing the steps of the above-described method when said program set is executed by at least one computer.

This program set can use any programming language and take the form of source code, object code, or a code intermediate between source code and object code, such as a partially compiled form or any other desirable form.

The present invention further relates to an apparatus for updating a teacher-student framework comprising a teacher model and a student model, the apparatus comprising:

- a selecting module configured to select, for a given test sample, the most confident model among the student model and the teacher model based on a maximum logit score to generate a pseudo label for said test sample; and
- an updating module configured to update initial parameters of the student model based on the generated pseudo-label and configured to update initial parameters of the teacher model based on the updated parameters of the student model.

The apparatus referred to hereinafter as the updating apparatus, may be configured to carry out the above-mentioned updating conducting method and may have part or all of the above-described features. For instance, at least one of said modules (one or more modules among these modules) is located on a cloud which typically refers to a network of remote servers accessed over the internet to store, manage and process data rather than on a local server or personal computer. Accordingly, one specific module or a plurality of modules of the updating apparatus is hosted or operated within the cloud rather than residing on a local server. It means that the functions or operation of the or these module(s) are carried out using cloud-based resources or services.

Of course, the task conducting apparatus may have the hardware structure of a computer which refers to the physical components and architecture that make up the computer system. These components include for example the central processing unit (CPU) and memory modules (such as RAM).

The present invention further relates to vehicle comprising the above-described apparatus.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a block diagram of an updating apparatus according to an embodiment of the present invention; and
- FIG.2 is a flowchart of an updating method according to an embodiment of the present invention.

DETAILED DESCRIPTION OF EMBODIMENTS

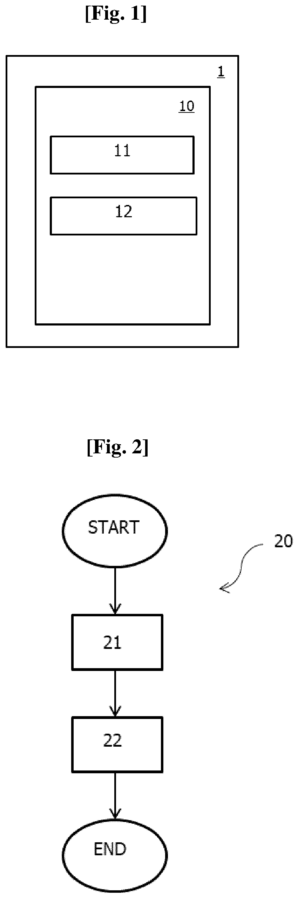

Figure 1 shows a block diagram of an updating apparatus 10 of a teacher-student framework comprising a teacher model T and a student model S. The updating apparatus comprises a selecting module 11 and an updating module 12 according to embodiments of the present invention.

The updating apparatus 10 may be located inside or outside a vehicle 1. The vehicle 1 may be directed to an apparatus capable of transporting people or objects from one location to another, such as a car or a motorcycle, and may be categorized into different levels based on the extent of automation.

Alternatively or additionally, one module or a plurality of modules among the modules of the updating apparatus 10 may be hosted or operated within a cloud (extern server) rather than residing on a local server.

The updating apparatus 10 may be configured to update the teacher-student framework and more specifically the teacher model T and the student model S. The teacher model T serves as a reference or a guide for the training process well-known in machine learning by a skilled person in the art. It is typically a more complex and well-established model that has been pre-trained on a large dataset. The teacher model T comprises extensive knowledge and expertise in the task at hand, allowing it to provide guidance to the student model S during the training. On the other hand, the student model S is the primary focus of the training process. It is a simpler and more lightweight version of the teacher model T, designed to learn from the guidance provided by the teacher model T. The student model S undergoes iterative training sessions where it attempts to mimic the behavior and predictions of the teacher model T.

The student model S can be either a transformer model or a convolutional neural network, while the teacher model T can also be a transformer model or a convolutional neural network.

Accordingly, the updating apparatus 10 may comprise an electronic circuit, a processor (shared, dedicated, or group), a combinational logic circuit, a memory that executes one or more software programs, and/or other suitable components that provide the described functionality. In other words, the updating apparatus 10 may be connected to a memory, which may store data, e.g. at least one computer program, which, when executed, carries out the updating method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be integrated circuit in which the program is incorporated, the circuit being adapted to execute the training method or to be used in its execution.

The selecting module 11 is a module configured to select, for a given data sample, the most confident model among the student model S and the teacher model T based on a maximum logit score to generate a pseudo label for said test sample.

To this end, the student model S, also denoted as $M_S$, is initialized with parameters $\theta$, while the teacher model T, also denoted as $M_T$, is initialized with the same parameters $\theta'$ as the student model S. Then, for a given task t to be learned, the parameters $\theta$ of the student model S and the parameters $\theta'$ of the teacher model T are updated using supervised data from a dataset $D_t^s$. Using supervised data to update these parameters is well-known by the person skilled in the art as the supervised phase. During this phase, a model (teacher and student models) learns from labeled data, where each training sample is associated with a ground truth label. The primary goal of this phase is to enable the model to generalize well to unseen data by minimizing the discrepancy between its predictions and the actual labels.

However, as explained above, the problem of catastrophic forgetting arises during this process. In fact, catastrophic forgetting occurs when the model, while learning the new task t, tends to overwrite its knowledge of previously learned tasks. This results in a significant drop in performance on earlier tasks as the model's parameters are adjusted to fit the new data. This challenge is particularly pronounced in continual learning scenarios, where the model is required to learn multiple tasks sequentially without the ability to retrain from scratch on a combined dataset of all tasks.

In order to mitigate catastrophic forgetting, the selecting module 11 is configured to receive as an input, the teacher model T and the student model S after being processed during the supervised phase for the given task. Accordingly, for each test sample x of an unsupervised dataset $D_t^u$, the selecting module 11 is configured to compares the logits (outputs) of the teacher model T and the student model S for this test sample x.

The selecting module 11 is then configured to predict the most probable class for this test sample x by using the maximum logits for each model. If the logits of the teacher model T are higher than those of the student model S, the predicted class for this test sample x, is the one predicted by the teacher model T. Otherwise, the predicted class is the one predicted by the student model S.

The predicted class is then treated as a pseudo-label which indicates that this label is not provided by a human annotator but is instead generated by the model itself. Accordingly, the pseudo label selected by the selecting module 11 (and therefore generated) is that of the model that has the highest confidence in its prediction.

The selecting module 11 may be implemented as software running on the updating apparatus 10 or may be implemented partially or fully as a hardware element of the updating apparatus 10.

The updating module 12 is configured to update initial parameters θ of the student model S based on the generated pseudo-label and is configured to update initial parameters θ' of the teacher model T based on the updated parameters of the student model S. Of course, the initial parameters refer to the model's parameters (teacher or student) after the supervised learning phase.

More specifically, the updating module 12 is configured to update the initial parameters θ of the student model S using a stochastic gradient descent (SGD) to calculate the gradient of the loss function (that may be a cross-entropy loss) with respect to the generated pseudo label as follows:

$$\theta_n = \theta - \gamma \nabla L(M_S(x), \hat{y}) \qquad (1)$$

wherein:

- $M_S(x)$ is the output (prediction) of the student model $M_S$ when given the sample x;
- θ are the initial parameters of the student model;
- $\theta_n$ are the updated parameters of the student model ;

- $\hat{y}$ is the selected pseudo label by the selecting module 11;
- L is the loss function;
- $\nabla L$ is the gradient of the loss function; and
- γ is the learning rate which is an hyperparameter that is updated with the gradient.

The updating module 12 is then configured to update the teacher parameters θ' using for example a moving average (EMA) between updated parameters of the student model S and the initial parameters θ' of the teacher model T as follows:

$$\theta'_n = \alpha\theta' + (1 - \alpha)\,\theta_n \qquad (2)$$

wherein:

- θ' are the initial parameters of the teacher model T;
- $\theta'_n$ are the updated parameters of the teacher model T;
- $\theta_n$ are the updated parameters of the student model S; and
- α is set between [0, 1] and denotes the momentum of the teacher updates where larger values of α favor more stability.

When α is set to a high value, for example, 0.9999, the teacher model T at the start of the given task can be considered as a strong reference for past tasks.

The updating module 12 may be implemented as software running on the updating apparatus 10 or may be implemented partially or fully as hardware element of the updating apparatus 10. In particular, the updating apparatus 10 may comprise a program that includes both the selecting module 11 and the updating module 12. Alternatively and without limitation, the selecting module 11 may be realized as independent program (in particular, beside a program forming the updating module 12).

The steps carried out by the updating module 10 are detailed hereinafter with respect to the corresponding updating method, an embodiment of which is illustrated in Figure 2.

Figure 2 is a flowchart of the updating method 20 according to an embodiment of the present invention. The updating method 20 is performed for updating the teacher-student framework, and more particularly the teacher model T and the student model S. To this end, the updating method 20 comprises a step 21 of selecting for the given test sample, the most confident model among the student model S and the teacher model T. This selection is based, as described above, on a maximum logit score to generate a pseudo label for said test sample. To this end, the step 21 comprises an optional substep which involves computing a distribution of each model features for the given test sample over a predetermined number of dimensions, and generating an augmented version of the test sample before generating the pseudo-label.

That is, the updating method 20 comprises a step 22 of updating initial parameters of the student model based on the generated pseudo-label and updating initial parameters of the teacher model T based on the updated parameters of the student model S. To this end, updating the initial parameters of the student model S comprises a substep that comprises minimizing the loss function with respect to the generated pseudo label, such loss function being a cross-entropy loss or may be a Contrastive Language Image Pretraining (CLIP) loss, while updating the parameters of the teacher model T comprises a substep of processing an exponential moving average of the updated parameters of the student model S.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense. Also, it will be understood by the person skilled in the art that the steps of the method described herein can be implemented as software, hardware, or a combination of both, and that the functions of the apparatus described herein may be implemented as method steps.

**Claims**

1. A computer-implemented method (20) for updating a teacher-student framework comprising a teacher model (T) and a student model (S), the computer-implemented method (20) comprising selecting (21), for a given test sample, the most confident model (S, T) among the student model (S) and the teacher model (T) based on a maximum logit score to generate a pseudo label for said test sample; updating (22) initial parameters $(\theta)$ of the student model (S) based on the generated pseudo-label and updating initial parameters $(\theta')$ of the teacher model (T) based on the updated parameters $(\theta_n)$ of the student model (S).

2. The computer-implemented method (20) according to claim 1, wherein updating (22) the initial parameters of the student model comprises minimizing a loss function with respect to the generated pseudo label.

3. The computer-implemented method (20) according to claim 2, wherein the loss function is a cross-entropy loss that is minimized with respect to the parameters of the student model (S).

4. The computer-implemented method (20) according to any one of claims 1 to 3, wherein updating the initial parameters $(\theta')$ of the teacher model (T) comprises processing an exponential moving average of the updated parameters $(\theta_n)$ of the student model (S).

5. The computer-implemented method (20) according to any one of claims 1 to 4, wherein the student model (S) is a transformer model or a convolutional neural network and wherein the teacher model (T) is a transformer model or a convolutional neural network.

6. The computer-implemented method (20) according to any one of claims 1 to 5, wherein selecting the most confident model (T, S) comprises a step of computing a distribution of each model features for the given test sample over a predetermined number of dimensions, and generating an augmented version of the test sample before generating the pseudo label.

7. A computer program set including instructions for executing the steps of the method of any one of claims 1 to 6 when said program set is executed by at least one computer.

8. A recording medium readable by at least one computer and having recorded thereon at least one computer program including instructions for executing the steps of the method of any one of claims 1 to 6.

9. An apparatus (10) for updating a teacher-student framework comprising a teacher model (T) and a student model (S), the apparatus (10) comprising:

   - a selecting module (11) configured to select, for a given test sample, the most confident model (S, T) among the student model (S) and the teacher model (T) based on a maximum logit score to generate a pseudo label for said test sample; and
   - an updating module (12) configured to update initial parameters $(\theta)$ of the student model (S) based on the generated pseudo-label and configured to update initial parameters $(\theta')$ of the teacher model (T) based on the updated parameters $(\theta_n)$ of the student model (S).

10. A vehicle (1) comprising an apparatus (10) according to claim 9.

[Fig. 1]

[Fig. 2]

| | Europäisches Patentamt European Patent Office Office européen des brevets | **EUROPEAN SEARCH REPORT** | **Application Number** EP 24 17 8061 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAMIAN SÓJKA ET AL: "AR-TTA: A Simple Method for Real-World Continual Test-Time Adaptation", ARXIV.ORG, CORNELL UNIVERSITY LIBRARY, 201 OLIN LIBRARY CORNELL UNIVERSITY ITHACA, NY 14853, 18 September 2023 (2023-09-18), XP091617239, * page 3, right-hand column, paragraph 1 - paragraph 2; figure 2 * * page 4, left-hand column, paragraph 1 - paragraph 4 * * page 5, left-hand column, last paragraph - page 6, left-hand column, paragraph 1 * ----- | 1-10 | INV. G06N3/096 |
| A | HAOZHI CAO ET AL: "Multi-Modal Continual Test-Time Adaptation for 3D Semantic Segmentation", ARXIV.ORG, CORNELL UNIVERSITY LIBRARY, 201 OLIN LIBRARY CORNELL UNIVERSITY ITHACA, NY 14853, 18 March 2023 (2023-03-18), XP091462143, * page 3, left-hand column, last paragraph - page 6, left-hand column, paragraph 1; figure 2 * ----- -/-- | 1-10 | TECHNICAL FIELDS SEARCHED (IPC) G06N |

The present search report has been drawn up for all claims

| Place of search | Date of completion of the search | Examiner |
|---|---|---|
| Munich | 9 December 2024 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG QIN ET AL: "Continual Test-Time Domain Adaptation", 2022 IEEE/CVF CONFERENCE ON COMPUTER VISION AND PATTERN RECOGNITION (CVPR), IEEE, 18 June 2022 (2022-06-18), pages 7191-7201, XP034195634, DOI: 10.1109/CVPR52688.2022.00706 [retrieved on 2022-09-27] * page 7192, left-hand column, paragraph 2 * * page 7193, right-hand column, last paragraph - page 7196, left-hand column, paragraph 1; figure 2 * ----- | 1-10 | |
| | | | **TECHNICAL FIELDS SEARCHED (IPC)** |

The present search report has been drawn up for all claims

| Place of search | Date of completion of the search | Examiner |
|---|---|---|
| Munich | 9 December 2024 | Herri, Edmond |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

     .................................................................................
& : member of the same patent family, corresponding
document

EPO FORM 1503 03.82 (P04C01)

page 2 of 2